# EUROPÄISCHE PATENTSCHRIFT

(11) **EP 0 841 241 B1**
(45) Veröffentlichungstag und Bekanntmachung des Hinweises auf die Patenterteilung: **27.12.2000**
(21) Anmeldenummer: 97105304.6
(22) Anmeldetag: 27.03.1997
(51) Int. Cl.: B62D 25/14

(54) **Cockpitquerträger in einem Kraftfahrzeug**
Crossbar for a dashboard of a motor vehicle.
Traverse de support d'un tableau de bord d'un véhicule automobile.

(30) Priorität: 07.11.1996 DE 19645895
(43) Veröffentlichungstag der Anmeldung: 13.05.1998
(73) Patentinhaber: Micro Compact Car smart GmbH, 71272 Renningen (DE)
(72) Erfinder: Ganser, Martin, 71263 Weil der Stadt (DE); Henseler, Wolfgang, 71083 Herrenberg (DE); Schick, Ulrich, 72202 Vollmaringen (DE)
(74) Vertreter: Weiss, Klaus

(56) Entgegenhaltungen:
- EP-A- 0 266 255
- EP-A- 0 431 986
- DE-A- 4 410 082

## Beschreibung

Die Erfindung betrifft einen Cockpitquerträger, der im Vorbau als Stabilisierelement im Crash-Fall auf Höhe einer Instrumententafel in Fahrzeugquerrichtung ausgerichtet ist und mit je einem Ende an den gegenüberliegenden Seiten des Kraftfahrzeuges festgelegt ist, und an welchem mindestens ein Lagersitz zur Abstützung einer Lenkspindel angeordnet ist.

Aus der DE 44 10 082 A1 ist ein Cockpitquerträger in einem Kraftfahrzeug bekannt, an dem eine Lenksäule lagerbar ist. Um Gewicht zu sparen, sind Teile des Cockpitquerträgers aus Aluminium hergestellt, welche nach der Fertigung zusammengefügt werden. So ist ein Teil als Halter ausgebildet, der an den Cockpitquerträger angeschraubt ist, und an den wiederum das Lager der Lenksäule angeschraubt wird. Damit sind viele Einzelteile ausgebildet, deren Verbindungsstellen sich bei starker Belastung, wie bei einem Crash, lösen können, was eine große Gefahr für die Sicherheit der Insassen bedeuten würde. Außerdem wird die Montage des Cockpitquerträgers aufgrund des höheren Zeitaufwandes und des größeren Teilebedarfes verteuert.

In der DE 30 04 797 A1 ist eine Lenksäule beschrieben, die an einem Tragarm gelagert ist, der an einem Türpfeiler befestigt, sich in den Fahrzeugvorbau erstreckt und durch eine nach oben gerichtete Strebe ein weiteres Mal mit dem Fahrzeugkörper verbunden ist. Der Tragarm ist über seine Länge aus zwei rinnenförmigen Teilen zu einem Rohr zusammengeschweißt und weist an seinem freien Ende eine wiegenförmige Lagerhälfte für die Lenksäule auf, welche zudem am Tragarm angeschweißt ist. Die Lenksäule weist ein teleskopierbares Mantelrohr auf, das mit dem Lagerhälftengegenstück verschraubt ist. Damit umfaßt auch dieser Tragarm eine Vielzahl von Teilen, um die Lenksäule mit dem Mantelrohr im Fahrzeug zu lagern.

Aus der EP 0 266 255 A1 ist eine vormontierte Lenksäule eines Kraftfahrzeuges bekannt, welche eine obere und eine untere Lenkspindel aufweist, wobei die obere Lenkspindel mit einem Lenkrad verbunden ist und von einem vormontierten Träger mittels zweier Lager gehalten wird. Der Träger bildet zusammen mit einem Spritzblech eine den Fahrzeuginnenraum gegenüber dem Motorenraum separierende Wand. Die vorgeschlagene Kombination aus Lenksäulenträger und Spritzwand ist für eine Konstruktion ohne Sicherheitsquerträger im Cockpitbereich vorgesehen, woraus sich ein erhebliches Sicherheitsdefizit im Crash-Fall ergibt.

In der EP 0 431 986 A1 ist eine weitere Lösung für eine Lenkspindellager beschrieben, welche jedoch ebenfalls die Erfordernis eines Sicherheitsquerträgers und die damit verbundenen konstruktiven Probleme unberücksichtigt läßt.

Die Aufgabe der Erfindung besteht darin, die Lagerung einer Lenkspindel an einem Cockpitquerträger kostengünstiger zu gestalten.

Die Aufgabe wird durch einen Cockpitquerträger mit den Merkmalen des Patentanspruches 1 gelöst.

Der Cockpitquerträger im Vorbau eines Kraftfahrzeuges trägt zur Stabilisierung des Vorbaues, insbesondere bei einem Crash bei. Um diese Funktion zu erfüllen, ist es von Vorteil, wenn der Cockpitquerträger weitgehend einstückig geformt ist. Durch die Anformung mindestens eines Lagersitzes für eine Lenkspindel an den Cockpitquerträger werden Befestigungen eingespart, wodurch nicht nur die Fertigung des Lagersitzes für die Lenkspindel kostengünstiger wird, sondern auch eine höhere Sicherheit gegeben ist, da keine Befestigungen vorhanden sind, die sich bei hoher Belastung lösen könnten. Auch die Montagezeit zur Lagerung der Lenkspindel wird damit gegenüber bekannten Konzepten verringert und auch eine Gewichtseinsparung kann erreicht werden.

Durch einen vom Cockpitquerträger abkragenden, und an diesen angeformten Halter, kann ein Lagersitz für die Lenkspindel auch mit einem größeren Abstand zur Längsachse des Cockpitquerträgers gelagert werden. Damit ist am Cockpitquerträger auch Platz für zwei oder mehrere angeformte Lagersitze für die Lenkspindel.

Ein derartig einteilig an den Cockpitquerträger angeformter Lagersitz kann vorteilhaft als Lagerhalbschale ausgebildet werden, welche nach der Aufnahme der Lenkspindel durch eine Lagergegenhalbschale ergänzt wird. In einer weiteren Ausbildungsmöglichkeit ist als Lagersitz eine Lagerhülse an den Cockpitquerträger angeformt, in die die Lenkspindel axial einschiebbar ist.

Der angeformte Lagersitz bietet die besonders kostengünstige Möglichkeit, die Lenkspindel selbst, ohne die sonst übliche Umhüllung durch ein Mantelrohr, mit einem Lager, z.B. einem Wälzlager, direkt in einem oder mehreren Lagersitzen am Cockpitquerträger zu lagern. Damit kann das Mantelrohr als Lagerung für die Lenkspindel eingespart werden. Der einteilig vom Cockpitquerträger abkragende Halter, an den mindestens ein Lagersitz angeformt ist, kann eine Form aufweisen, mit der er einen Abschnitt der Lenkspindel zumindest abschnittsweise beabstandet umgibt, wodurch er die Lenkspindel vor Beschädigung schützen kann.

Kosten- und fertigungsgünstig ist dieser Cockpitquerträger als Gußteil, insbesondere als Leichtmetallgußteil ausgebildet.

Weitere Vorteile und Ausgestaltungen gehen aus den Unteransprüchen und der Beschreibung hervor.

Die Erfindung ist nachstehend anhand einer Zeichnung näher beschrieben.

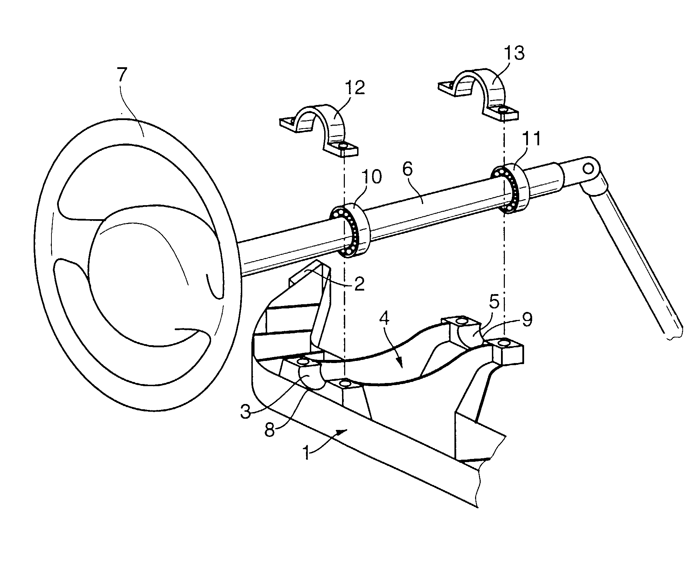

Die Figur zeigt einen Abschnitt eines Cockpitquerträgers 1, der im Vorbau eines nicht weiter dargestellten Kraftfahrzeuges auf Höhe einer Instrumententafel in Fahrzeugquerrichtung ausgerichtet, mit je einem Ende, wovon hier nur das in Fahrtrichtung rechtsliegende Ende 2 dargestellt ist, an den gegenüberliegenden Seiten des Kraftfahrzeuges festgelegt ist. Der Cockpitquerträger 1 trägt so zur Stabilität des Kraftfahrzeugaufbaues, insbesondere beim Crash bei.

Der gegossene oder durch Umformung hergestellte Cockpitquerträger 1 weist einen einteilig angeformten ersten Lagersitz 3 und an einem abkragenden angeformten Halter 4 einen weiteren Lagersitz 5 auf. Diese beiden beabstandet liegenden Lagersitze 3 und 5 sind zur Lagerung einer Lenkspindel 6 vorgesehen. Die Lenkspindel 6 trägt im Fahrzeuginnenraum ein Lenkrad 7 und überträgt die Lenkbewegung auf ein im Vorbau liegendes, nicht dargestelltes Lenkgetriebe.

Die Lagersitze 3 und 5 sind als Lagerhalbschalen 8 bzw. 9 ausgebildet, woran nach Aufnahme der Lenkspindel 6 mit ihren Wälzlagern 10 und 11, die zugehörigen Lagergegenhalbschalen 12 bzw. 13 über eine Verschraubung festlegbar sind. Diese Lagersitze 3 und 5 könnten aber auch als Lagerhülse angeformt sein, worin die Lenkspindel 6 dann axial einschiebbar wäre.

Die Lenkspindel 6 ist mit ihren Wälzlagern 10 und 11 direkt in den zugehörigen Lagersitzen 3 und 5 am Cockpitquerträger 1 gelagert, so daß ein Mantelrohr eingespart wird. Als Schutz der Lenkspindel 6 gegen Beschädigung dient der Halter 4, der einen Abschnitt der Lenkspindel 6 abschnittsweise beabstandet umgibt.

## Patentansprüche

1. Cockpitquerträger in einem Kraftfahrzeug, der im Vorbau als Stabilisierelement im Crash-Fall auf Höhe einer Instrumententafel in Fahrzeugquerrichtung ausgerichtet ist und mit je einem Ende an den gegenüberliegenden Seiten des Kraftfahrzeuges festgelegt ist, und an welchem mindestens ein Lagersitz zur Abstützung einer auf dem Cockpitquerträger (1) gelagerten Lenkspindel (6) angeordnet ist, wobei der wenigstens eine Lagersitz (3, 5) an den Cockpitquerträger (1) angeformt ist.

2. Cockpitquerträger nach Anspruch 1,
**dadurch gekennzeichnet,**
daß ein angeformter Halter (4) vom Cockpitquerträger (1) abkragt, der wenigstens einen der Lagersitze (5) aufnimmt.

3. Cockpitquerträger nach Anspruch 1,
**dadurch gekennzeichnet,**
daß die Lenkspindel (6) unter Zwischenschaltung eines Lagers (10, 11) im Lagersitz (3 bzw. 5) gelagert ist.

4. Cockpitquerträger nach Anspruch 1,
**dadurch gekennzeichnet,**
daß der Lagersitz (3, 5) als Halbschale (8, 9) ausgebildet ist, und diese durch eine festlegbare Lagergegenhalbschale (12 bzw. 13) ergänzt wird.

5. Cockpitquerträger nach Anspruch 1,
**dadurch gekennzeichnet,**
daß mindestens eine Lagerhülse an den Cockpitquerträger (1) angeformt ist, in die die Lenkspindel (6) axial einschiebbar ist.

6. Cockpitquerträger nach Anspruch 2,
**dadurch gekennzeichnet,**
daß der Halter (4) einen Abschnitt der Lenkspindel (6) zumindest abschnittsweise beabstandet umgibt.

7. Cockpitquerträger nach einem oder mehreren der vorherstehenden Ansprüche,
**dadurch gekennzeichnet,**
daß dieser als Gußteil, insbesondere als Leichtmetallgußteil ausgebildet ist.

## Claims

1. Steering traverse-support, as a stabilizing element in the event of a crash, which, in the pre-assembly, is placed transversely in position in the vehicle, at the level of a dashboard, with single ends of the traverse support being attached on opposite sides of the vehicle, the said traverse support having at least one bearing point to support a steering-wheel shaft (6) which is disposed on the steering traverse-support (1), whereby the at least one bearing point (3, 5) is developed on the steering traverse-support (1).

2. Steering traverse-support in accordance with claim 1,
characterized in that
a developed holder (4) slopes off from the steering traverse-support (1), which is taken up by at least one of the bearing points (5).

3. Steering traverse-support in accordance with claim 1,
characterized in that
the steering-wheel shaft (6), through the interposition of a bearing (10, 11), is supported on the bearing point (3 or 5).

4. Steering traverse-support in accordance with claim 1,
characterized in that
the bearing point (3, 5) is developed as a half-shell, and the latter is complemented by an attachable bearing, counter half-shell (12 or 13).

5. Steering traverse-support in accordance with claim 1,
characterized in that
at least one bearing sleeve is formed on the steering traverse-support (1), into which the steering-wheel shaft (6) can be inserted in an axial direction.

6. Steering traverse-support in accordance with claim 1,
characterized in that
the holder (4) at least partly surrounds separated sections of the steering traverse-support (6).

7. Steering traverse-support in accordance with any one or several of the proceeding claims,
characterized in that
it is developed as a casting, as a light metal casting in particular.

## Revendications

1. Traverse de cockpit dans un véhicule automobile, montée dans la partie avant, à titre d'élément de stabilisation en cas de collision, au niveau d'un panneau d'instrumentation dans la direction transversale du véhicule et fixée, à chaque extrémité, sur les côtés opposés du véhicule automobile, et sur laquelle est disposé au moins un siège de palier, prévu pour soutenir un arbre de colonne de direction (6) monté à rotation sur la traverse de cockpit (1), le au moins un siège de palier (3, 5) étant formé d'un seul tenant sur la traverse de cockpit (1).

2. Traverse de cockpit selon la revendication 1, caractérisée en ce qu'un support (4) formé d'un seul tenant fait saillie de la traverse de cockpit (1), en supportant au moins l'un des sièges de palier (5).

3. Traverse de cockpit selon la revendication 1, caractérisée en ce que l'arbre de colonne de direction (6) est monté à rotation dans le siège de palier (3 ou 5) avec interposition d'un palier (10, 11).

4. Traverse de cockpit selon la revendication 1, caractérisée en ce que le siège de palier (3, 5) est réalisé sous la forme d'une demi-coquille (8, 9) et celle-ci est complétée par une demi-coquille conjuguée de palier (12 ou 13) susceptible d'être fixée.

5. Traverse de cockpit selon la revendication 1, caractérisée en ce qu'au moins un coussinet de palier est formé d'un seul tenant sur la traverse de cockpit (1), coussinet dans lequel l'arbre de colonne de direction (6) est susceptible d'être introduit coaxialement.

6. Traverse de cockpit selon la revendication 2, caractérisée en ce que le support (4) entoure à distance, au moins par tronçons, un tronçon de l'arbre de colonne de direction (6).

7. Traverse de cockpit selon l'une ou plusieurs des revendications précédentes, caractérisée en ce qu'elle est réalisée sous la forme de pièce moulée, en particulier de pièce moulée en métal léger.
